# EUROPÄISCHE PATENTSCHRIFT

(11) **EP 0 240 803 B1**
(45) Veröffentlichungstag und Bekanntmachung des Hinweises auf die Patenterteilung: **23.02.1994**
(21) Anmeldenummer: 87104067.1
(22) Anmeldetag: 19.03.1987
(51) Int. Cl.: B01D 61/00, B01D 71/00

(54) **Verfahren zur Trennung der Komponenten eines Flüssigkeitsgemisches voneinander**
Process for the separation of the components of a liquid-mixture
Procédé de séparation des composants d'un mélange liquide

(30) Priorität: 25.03.1986 DE 3610011
(43) Veröffentlichungstag der Anmeldung: 14.10.1987
(73) Patentinhaber: GKSS-FORSCHUNGSZENTRUM GEESTHACHT GMBH, D-21502 Geesthacht (DE)
(72) Erfinder: Kaschemekat, Jürgen, Dr., D-2504 Geesthacht (DE); Schütt, Frank, D-2351 Grossenaspe (DE); Wenzlaff, Axel, D-2050 Escheburg (DE)
(74) Vertreter: Schöning, Hans-Werner, Dipl.-Ing.

(56) Entgegenhaltungen:
- EP-A- 0 062 494
- DE-A- 3 037 736
- DE-C- 3 410 155
- US-A- 2 981 680
- PATENT ABSTRACTS OF JAPAN, Band 9, Nr. 82 (C-275)[1805], 11. April 1985; & JP-A-59 216 605 (KURI KAGAKU SOUCHI K.K.) 06-12-1984
- JOURNAL OF MEMBRANE SCIENCE, Band 16, Nr. 1/3, Dezember 1983, Seiten 269-284,Elsevier Science Publishers B.V., Amsterdam, NL; M.H.V. MULDER et al.:"Ethanol-water separation by pervaporation"
- PATENT ABSTRACTS OF JAPAN, Band 3, Nr. 59 (C-46), 19. Mai 1979, Seite 65 C 46;& JP-A-54 33 279 (SHOWA DENKO K.K.) 03-10-1979

## Beschreibung

Die Erfindung betrifft ein Verfahren zur Trennung eines Flüssigkeitsgemisches mit wenigstens einer daraus zu gewinnenden Minderkomponente, insbesondere auf biologischem Wege entstandene, ethanolhaltige Gärmaischen, unter Zuhilfenahme von Pervaporation, bei dem das Flüssigkeitsgemisch zur Gewinnung eines Permeatdampfes mit angereicherter Komponente eines ersten Pervaporationsschrittes in ein Retentat und dampfförmiges Permeat getrennt wird, welches nachfolgend kondensiert wird.

Ein Verfahren dieser Art ist bekannt (EP-A-0 062 494). Das bekannte Verfahren, das zwei aufeinanderfolgende Membrantrennstufen benutzt, die kaskadenartig zusammengeschaltet sind, ist darauf gerichtet, den mikroskopischen und makroskopischen Aufbau der Membranen zu verbessern. Die einzelnen Membranstufen sind dabei derart zusammengeschaltet, daß bei geringer Membrantrennleistung durch interne Teilrückführung innerhalb einer Membranstufe eine Verbesserung der Trennergebnisse bewirkt werden soll.

Gemische, die mit dem erfindungsgemäßen Verfahren getrennt werden sollen, sind auch solche, die beispielsweise auf biologischem Wege entstanden sind, wie Gärgemische bzw. Gärmaischen. Die in diesen Gemischen enthaltenen Kohlenwasserstoffe, beispielsweise Ethanol, sollen abgetrennt werden.

Das beispielsweise bei der Gärung von pflanzlichen Stoffen entstehende Ethanol wird bisher (Chem.-Ing.-Tech. 53 (1981) Nr. 1, S. 47-50) mittels Destillation/Rektifikation auf maximal 95 % (azeotropes Gemisch) angereichert. Eine anschließende Absolutierung auf mindestens 99,7 % erfolgt dann meist durch Schleppmitteldestillation. Die wirtschaftliche Gewinnung von Ethanol aus Maischen ist abhängig von der sich einstellenden Ethanolkonzentration in der Gärmaische. Unterhalb von ca. 6 % Ethanol steigt der benötigte Energiebedarf zur Gewinnung von reinem Ethanol durch Destillation exponentiell an. Somit ist es notwendig, bestimmte Pflanzen zur Gärung zu nehmen, die einen Ethanolgehalt in der Gärmaische von über 6 % liefern. Die Pflanzen, die dieses zu liefern imstande sind, sind meist hochwertige Pflanzen, die zur Nahrungsmittelgewinnung angebaut werden, wie beispielsweise Kartoffeln, Zuckerrüben, Getreide usw..

Um auch Pflanzen und deren Abfälle aus anderen Nutzungen, die bei der Gärung Ethanol in geringen Konzentrationen liefern, zur Ethanolgewinnung nutzen zu können, muß der Energiebedarf reduziert werden.

Es ist Aufgabe der vorliegenden Erfindung, ein Verfahren der eingangs genannten Art derart auszubilden, daß unter wirtschaftlichen und energiegünstigen Bedingungen die Trennung von Substanzen auch aus Flüssigkeitsgemischen ermöglicht wird, in denen diese Substanz nur in einem geringen Prozentsatz, beispielsweise weniger als 6 %, enthalten ist.

Gelöst wird die Aufgabe gemäß der Erfindung dadurch, daß
der Permeatdampf durch die Kondensation in einen an der Komponente niederkonzentrierten Teil, der in das Flüssigkeitsgemisch zurückgeführt wird, und einen an der Komponente höherkonzentrierten Teil fraktioniert wird und
der höherkonzentrierte Teil absolutiert wird, wobei
die Absolutierung des höherkonzentrierten Teils mittels eines zweiten Pervaporationsschrittes in Form aufkonzentrierten Retentats oder durch Destillation erfolgt.

Der Vorteil des erfindungsgemäßen Verfahrens besteht im wesentlichen darin, daß mit einfachen Verfahrensschritten auf wirtschaftliche und energiegünstige Weise eine Trennung von Komponenten eines Flüssigkeitsgemisches möglich ist, in dem die zu trennende Substanz nur in einem geringen Prozentsatz enthalten ist.

So ist es mit dem erfindungsgemäßen Verfahren insbesondere möglich, beispielsweise auch Gärmaischen aus Stroh und Schalen der Cassavanuß zu behandeln. Das Ethanol wird mittels Pervaporation sowie bestimmten Membranen, die kommerziell erhältlich sind, aus der Maische entfernt. Diese Membranen liefern ein mit Ethanol angereichertes Permeat, welches zusätzlich durch fraktionierte Kondensation in einen niederkonzentrierten und einen hochkonzentrierten Teil aufgeteilt wird. Besonders vorteilhaft ist es, daß es mit der Erfindung möglich ist, das Ethanol bis über 60 % anzureichern, d.h. bis in einen Bereich, bei dem die Ethanolgewinnung erst wirtschaftlich bedeutsam wird.

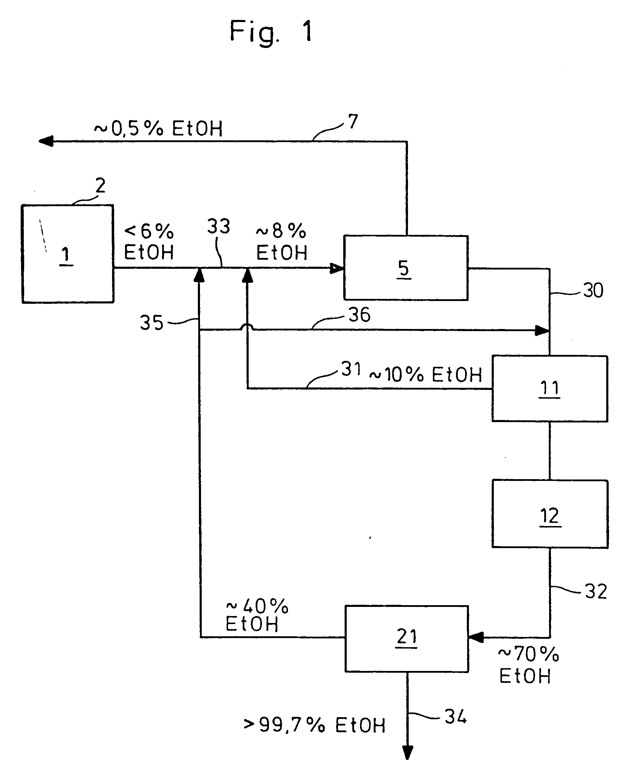

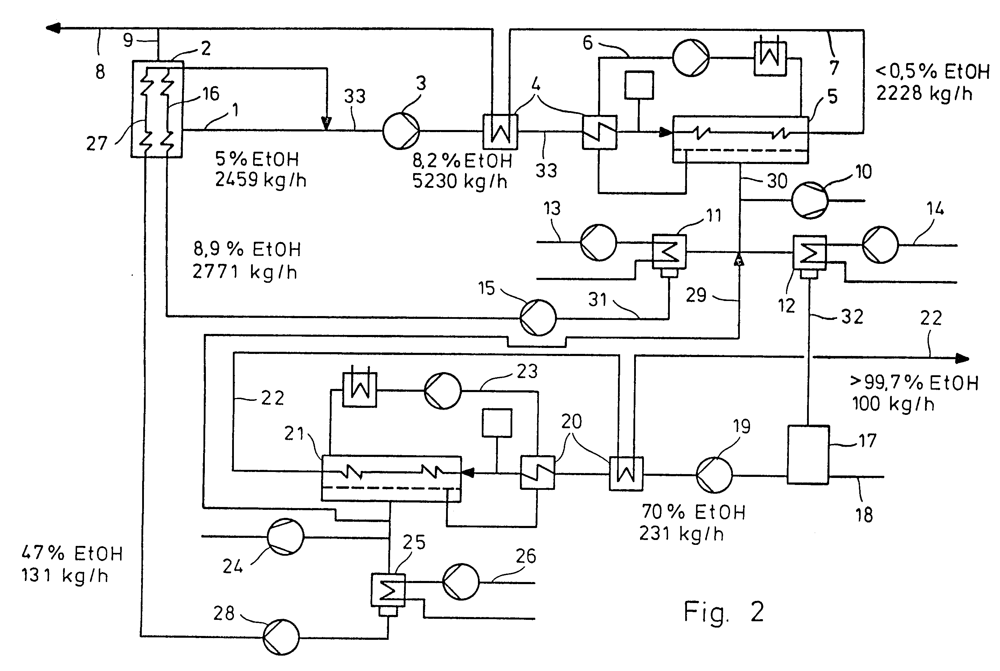

Die Erfindung wird im folgenden anhand eines Ausführungsbeispiels mittels der Figuren 1 und 2 näher erläutert, wobei
- Fig. 1: einen allgemeinen Überblick über die zur Durchführung des Verfahrens verwendete Einrichtung mit in Reihe geschalteten Kondensationsstufen und
- Fig. 2: eine speziellere Einrichtung mit parallel liegenden Kondensationsstufen zeigt.

Gemäß Fig. 1 wird Ethanol (EtOH), das in der Gärmaische 1 im Behälter 2 enthalten ist, mittels eines ersten Pervaporators 5 aus der Gärmaische 1 entfernt. Die Membranen des ersten Pervaporators 5 liefern einen mit Ethanol angereicherten Permeatdampf 30, der in zwei in Reihe geschalteten Kondensationsstufen 11 und 12 einer fraktionierten Kondensation unterzogen und in einen niederkonzentrierten und einen höherkonzentrierten Teil 31 und 32 aufgeteilt wird. Der niederkonzentrierte Teil 31 kann in den Zulauf des Pervaporators 5 zurückgeleitet werden. Der höherkonzentrierte Teil 32 wird direkt zur Gewinnung von reinem Ethanol 34 weiterverarbeitet; entweder durch eine zweite Pervaporation 21 zur Absolutierung oder evtl. mit einer Destillation zu 95 %igem Ethanol. Genügt der höherkonzentrierte Anteil nicht den Anforderungen, so wird er entweder (35) in den Zulauf 33 oder (36) dem Permeatdampf 30 zugegeben.

Das technische Prinzip der Pervaporation (Pervaporator 5 bzw. 21) ist folgendes: Über eine geeignete semipermeable Membran (nicht näher dargestellt) wird der vorgewärmte Zulaufstrom 33 mit den zu trennenden Komponenten (Ethanol/Wasser) geleitet. Der durch die Membran permeierende Stoffstrom 30 unterliegt einem Phasenwechsel von flüssig auf der Membranzulaufseite zu dampfförmig auf der Membranpermeatseite. Bei dieser Pervaporation wird durch Einsatz bestimmter Membranen dem Zulaufgemisch Ethanol entzogen. Das Retentat 7 (s. auch Fig. 2) bildet die keiner Zustandsänderung unterliegende Schlempe. Die treibende Kraft für den Permeatfluß liefert ein im Permeatraum anliegendes Grobvakuum (kleiner 50 mbar). Die Zusammensetzung des Permeats ist durch Sorptions- und Transportvorgänge in der Membran bestimmt. Das dampfförmige Permeat 30 wird über einen Kältemittelstrom kondensiert und kann an geeigneter Stelle wieder rückgeführt und/oder weiterverarbeitet werden. Da die Kondensationsenthalpie des Permeats abhängig ist von dessen Zusammensetzung, kann dieser Prozeß dahingehend optimiert werden, daß dem Permeatdampf 30 verschiedene Kondensationstemperaturen und/oder Kondensationsdrücke angeboten werden, wodurch Permeate 31, 32 verschiedener Konzentrationen erhalten werden. Energiemäßig am günstigsten ist es, eine spezielle Vakuumpumpe (z. B. Flüssigkeitsringpumpe) zwischen die Kondensatoren 11 und 12 zu schalten, was es ermöglicht, im Kondensator 12 unter Normaldruck zu kondensieren. Hierzu ist dann in den meisten Fällen eine Leistungswassertemperatur von 6° - 8° C für beide Kondensatoren ausreichend.

Durch die Verdampfung des Permeats an der Membran im Pervaporator 5 bzw. 21 wird dem Durchflußstrom Wärme entzogen, die, will man den Temperaturabfall kompensieren, über einen Wärmeträger wieder zugeführt werden muß. Der Energieverbrauch dieses Verfahrens beinhaltet sowohl die Verdampfungsenthalpie als auch die Kondensationsenthalpie. Über die selektiv durch die Membran permeierenden Komponenten des Zulaufgemisches 33 wird das Retentat 7 auf eine möglichst geringe, gerade noch zu vertretende, Ethanolkonzentration abgereichert. Das Retentat 7 verläßt unter Wärmeabgabe an den Zulaufstrom 33 (s. Fig. 2) als Schlempe die Anlage. Bei zu hohen Ethanolkonzentrationen kann im Batchverfahren gearbeitet werden, d. h. die Schlempe wird wieder in den Gärbehälter 2 zurückgeführt.

Eine technische Einrichtung zur Durchführung des erfindungsgemäßen Verfahrens wird mittels der Fig. 2 näher erläutert, wobei jeweils an charakteristischen Stellen die Konzentration des Ethanol in % und der Durchsatz in kg/h angegeben ist.

Die bei der Permeation anfallende Maische 1 mit einem Roethanolgehalt auch von unter 6 % wird aus dem Gärbehälter 2 mit einer Pumpe 3 über Wärmetauscher 4 dem Pervaporator 5 zugeführt und durchströmt diesen. Innerhalb dieses Pervaporators 5 wird der durchströmenden Maische 1 Ethanol entzogen. Die für die Verdampfungspermeation notwendige Wärme wird über einen Wärmemittelstrom 6 zugeführt. Das von Ethanol abgereicherte Retentat 7, mit einer Endkonzentration von unter 0,5 % EtOH, verläßt unter Wärmeabgabe an den Zulaufstrom 33 als Schlempe 8 die Anlage. Bei einem Batchverfahren kann es auch wieder in d Gärbehälter 2 zurückgeführt werden (9).

Der im Pervaporator 5, durch Anlegen eines Vakuums mit einer Vakuumpumpe 10, anfallende ethanolangereicherte Permeatdampf 30, wird in zwei parallel geschalteten Kondensatoren 11 und 12 kondensiert. Im Kondensator 11 wird durch einen Kältemittelstrom 13 mit einer Temperatur von ca. -20° C ein Permeat 31 mit ca. 10 % EtOH kondensiert. Im Kondensator 12 hat der Kältemittelstrom 14 dagegen eine tiefere Temperatur von ca. -50° C. Hier kondensiert ein Permeat 32 von ca. 70 - 75 % EtOH. Die Reihen- und Parallelschaltung der Kondensatoren 11, 12 sind einander äquivalent, wobei die Reihenschaltung mit höheren Kondensationstemperaturen auskommt. Es ist auch technisch möglich, einen einzigen Kondensator mit Temperaturgradienten und beliebigen Abgriffen zu verwenden.

Das niederkonzentrierte Kondensat 31 wird mit einer Pumpe 15 und unter Wärmeaufnahme 16 im Gärbehälter 2 der dem Pervaporator 5 zufließenden Maische 1 zugemischt.

Das auf über 60 % EtOH angereicherte Kondensat 32 aus dem Kondensator 12 wird in einen Pufferbehälter 17 geleitet. Aus diesem Behälter 17 kann das Ethanol auf zwei Wegen weiterverarbeitet werden:
1. Entweder wird es einer Destillationskolonne 18 zugeführt, die in bekannter Weise auf 95 % aufkonzentriert, oder
2. einer weiteren Pervaporationsanlage, die den Alkohol absolutiert.

Zur Absolutierung wird das Ethanol einer zweiten Pervaporation 21 zugeleitet. Dazu wird das Ethanol mit einer Pumpe 19 über Wärmeaustauscher 20 dem zweiten Pervaporator 21 zugeführt und durchströmt diesen. Durch Einbau bestimmter Membranen wird dem durchströmenden Ethanol/Wasser-Gemisch das Wasser entzogen. Das aufkonzentrierte Retentat 22 verläßt unter Wärmeabgabe an den Zulauf als absolutierter Alkohol (Produkt) die Anlage. Auch hier muß über einen Wärmemittelstrom 23 dem Pervaporator 21 Wärme zugeführt werden. Der durch Anlegen eines Vakuums mittels einer Vakuumpumpe 24 anfallende Permeatdampf hat, je nach Membrantyp, einen Ethanolgehalt von 20 - 50 %. Der Permeatdampf kann über eine Rohrleitung 29 den Kondensatoren 11, 12 der ersten Pervaporationsstufe zugeleitet werden oder das im Kondensator 25 mit Hilfe eines Kältemittelstroms 26 kondensierte Permeat wird unter Wärmeaufnahme 27 mit einer Pumpe 28 ebenfalls der Maische 1 zugeführt.

Bei der Durchführung der Pervaporation können zwei Membrantypen A und B zur Anwendung kommen.
- Membrantyp A:: Dieser Typ erhöht die organische Komponente gegenüber dem Zulauf im Permeat.
- Beispiel 1:: Membranen aus Polysiloxanen (Silicon), dargestellt als homogene Filme oder in Dünnfilmcomposittechnik erstellt oder als Gel oder Öl in die Poren von porösen Gerüsten aus anderen Polymeren oder keramischen Dünnschichten inkorporiert, oder silanisierte Silikatmembranen oder als Anschwemmembran, dargestellt aus in organischen Lösungsmitteln gequollenen silanisierten Silikaten oder anderen hydrophobierten Chemikalien.
- Beispiel 2:: Mikroporöse hydrophobe Folien, die durch Fällen aus Lösungsmitteln oder Recken entstehen, mit Porenweiten typisch von 20 bis 100 nm. Die vorzugsweise verwendeten Werkstoffe für diese Membranen sind PTFE, PP, PE, PBut, P. vinylidenfluorid, P. sulfon, P. carbonat.
- Beispiel 3:: Handelsübliche Membranen, wie RC 100 der Fa. UOP.
- Beispiel 4:: Polyurethanmembranen des Polyoltyps bzw. Polyethertyps.
- Membrantyp B:: Dieser Typ erhöht den Wassergehalt im Permeat gegenüber dem Zulauf.
- Beispiel 5:: Membranen aus Cellulose, Celluloseestern und deren Gemischen untereinander, vorzugsweise aus Cellulosetriacetat.
- Beispiel 6:: Membranen aus Polysulfon, Polyethersulfon, Polycarbonat, deren aktive Schicht maximal 2000 nm dick ist, und die nach dem Lösungsdiff. -vorgang trennen, also im fachlichen Sprachgebrauch porenfrei sind.
- Beispiel 7:: Membranen, deren aktive Schicht aus ionenaustauscherfähigen Polymeren besteht (Polyetlektrolyte) in der Art der Elektrodialysemembranen oder in dünneren Schichten.
- Beispiel 8:: Membranen aus vernetzten Polyvinylalkohol in der handelsüblichen Art der Firma GFT (Bad Homburg), sowie die übrige Gruppe der bekannten Pervaporationsmembranen, deren gemeinsame Eigenschaft der präferentielle Wasseraustrag ist.

Der Einsatz der verschiedenen Membranen A oder B innerhalb der Gruppen in einer Anlage gleichzeitig in nacheinander angeordneten Moduln ist erfindungsgemäß sinnvoll; dadurch werden die Trennschärfe und der Mengendurchsatz pro Fläche optimiert.

Die Membranen des Typs A bewirken, daß sie bei z. B. 40° C Betriebstemperatur Membranflüsse erzeugen zwischen 20 und 400 kg/m²/Tag. Die Konzentration der Permeats an z. B. Ethanol erhöht sich beim Durchgang durch die Membran von 8 % auf über 30 % entsprechend einem Trennfaktor von 5 bis 6.

Die Membranen des Typs B bewirken, daß sie Wasser austragen mit Trennfaktoren zwischen 10 und 10000, wobei die Flüsse bei sehr hohen Trennfaktoren und z. B. bei 40° C bei ca. 0.1 kg/m²/Tag liegen, und bei kleineren Trennfaktoren typisch bei 25 kg/m²/Tag. Innerhalb dieser Membrangruppe gilt verallgemeinert, daß die Flußleistung sich bei Temperaturerhöhung des Zulaufs pro 10° C jeweils verdoppelt. Die Trennschärfe wird dadurch nicht verändert.

## Patentansprüche

1. Verfahren zur Trennung eines Flüssigkeitsgemisches mit wenigstens einer daraus zu gewinnenden Minderkomponente, insbesondere auf biologischem Wege entstandene, ethanolhaltige Gärmaischen, unter Zuhilfenahme von Pervaporation, bei dem das Flüssigkeitsgemisch (1,33) zur Gewinnung eines Permeatdampfes mit angereicherter Komponente eines ersten Pervaporationsschrittes (5) in ein Retentat (7) und dampfförmiges Permeat (30) getrennt wird, welches nachfolgend kondensiert wird, dadurch gekennzeichnet, daß
der Permeatdampf (30) durch die Kondensation (11,12) in einen an der Komponente niederkonzentrierten Teil (31), der in das Flüssigkeitsgemisch (1,33) zurückgeführt wird, und einen an der Komponente höherkonzentrierten Teil (32) fraktioniert wird und
der höherkonzentrierte Teil (32) absolutiert wird, wobei die Absolutierung des höherkonzentrierten Teils (32) mittels eines zweiten Pervaporationsschrittes in Form aufkonzentrierten Retentats oder durch Destillation erfolgt.

2. Verfahren nach Anspruch 1, dadurch gekennzeichnet, daß der in der Komponente niederkonzentrierte Teil (31) in den Zulauf (1,33) des ersten Pervaporationsschrittes (5) eingespeist wird.

3. Verfahren nach einem oder beiden der Ansprüche 1 oder 2, dadurch gekennzeichnet, daß das beim zweiten Pervaporationsschritt (21) anfallende Permeat (35;36) entweder der Kondensationsstufe (11,12) oder in den Zulauf (33) des ersten Pervaporationsschrittes (5) oder zum Flüssigkeitsgemisch (1) zurückgeführt wird.

## Claims

1. A method of separating a liquid mixture comprising at least one lesser component to be obtained therefrom, in particular biologically produced ethanol-containing fermenting mash, with the aid of pervaporation, in which, in order to obtain a permeate vapour with an enriched component of a first pervaporation stage (5), the liquid mixture (1, 33) is separated into a retentate (7) and a vapour-form permeate (30) which is subsequently condensed, characterised in that
the permeate vapour (30) is, by virtue of the condensation (11, 12), fractionated into a part (31) of lower concentration on the component, which is returned to the liquid mixture (1, 33), and a part (32) which is more highly concentrated on the component and in that the more highly concentrated part (32) is rendered absolute, this absolutising of the more highly concentrated part (32) taking place by means of a second pervaporation stage in the form of concentrated retentate or by distillation.

2. A method according to claim 1, characterised in that the part (31) which is of lower concentration in the component is fed into the supply (1, 33) to the first pervaporation stage (5).

3. A method according to one or both of claims 1 or 2, characterised in that the permeate (35, 36) occurring during the second pervaporation stage (21) is fed back either to the condensation stage (11, 12) or into the supply (33) to the first pervaporation stage (5) or to the liquid mixture (1).

## Revendications

1. Procédé de séparation d'un mélange liquide comportant au moins un composant minoritaire devant en être extrait, en particulier du moût fermenté contenant de l'éthanol et obtenu par voies biologiques, en utilisant la pervaporation, procédé pour lequel le mélange liquide (1, 33) est séparé dans un rétentat (7) et un perméat (30) sous forme de vapeur, en vue de l'extraction d'un perméat vapeur comportant des composants enrichis d'une première étape (5) de pervaporation, le mélange étant par la suite condensé, procédé caractérisé en ce que
- le perméat vapeur (30) est fractionné par condensation (11, 12) en une fraction (31) qui est recyclée dans le mélange (1, 33) liquide et correspond au composant peu concentré, et en une fraction (32) correspondant au composant de forte concentration, et
- la fraction (32) de forte concentration est rendue absolue, cette opération s'effectuant au moyen d'une deuxième étape de pervaporation sous forme d'un rétentat à forte concentration ou par l' intermédiaire d'une distillation.

2. Procédé selon la revendication 1, caractérisé en ce que la fraction (31) correspondant au composant à faible concentration est alimentée dans le flux (1, 33) de la première étape de pervaporation (5).

3. Procédé selon une ou deux des revendications 1 ou 2, caractérisé en ce que le perméat (35 ; 36) recueilli lors de la deuxième étape (21) de pervaporation, est recyclé soit à l'étage de condensation (11, 12) soit dans le flux (33) de la première étape (5) de pervaporation ou dans le mélange liquide (1).
